# EUROPEAN PATENT APPLICATION

(11) **EP 3 838 553 A1**
(43) Date of publication of application: **23.06.2021**
(21) Application number: 19000572.8
(22) Date of filing: 18.12.2019
(51) Int. Cl.: B29C 59/00, B29C 59/16, B65B 61/04, B26D 3/08, B26D 9/00

(54) **CONTAINER PRE-CUTTING SYSTEM**

(71) Applicant: Industrias Tecnológicas de Mecanización y Automatizaciòn, S.A., 08960 Sant Just Desvern (Barcelona) (ES)
(72) Inventor: González, Manuel, 08960 Sant Just Desvern (Barcelona) (ES)
(74) Representative: Maldonado Jordan, Julia

(57) **Abstract**

This invention relates to a container pre-cutting system, applicable to container forming machines (4) with laminar material (3) that provide intermittent advances to the laminar material with a length according to an advance step of the machine; said system being suitable for making a lower pre-cut (32) on the lower surface and an upper pre-cut (32) on the upper surface of the laminar material (3). The system comprises a lower pre-cutting device (1) by laser, with at least one laser head (15), and an upper pre-cutting device (2) by blade or by laser. The pre-cutting devices (1, 2) are separated in the advance direction of the laminar material (3) by a length equal to a multiple of the advance step of the machine.

## Description

### Technical field

This invention is applicable to container forming machines with multilayer, bilayer or single-layer laminar material (3), and provides intermittent advances to the laminar material with a length according to the advance step of the machine; the system carrying out a pre-cut on the lower surface and a pre-cut on the upper surface of the laminar material in order to subsequently facilitate the separation of the containers of a single pack.

### Background art

When manufacturing containers, in particular container packs for the food industry, it is common to make pre-cutting lines on the bridge of the containers that affect a part of the thickness of the laminar material and the aim of which is to facilitate the subsequent manual tearing and separation of the pack containers by the end consumer.

In containers made with certain laminar materials, making the pre-cutting line on the upper surface of the laminar material is sufficient to allow for the subsequent tearing and separation of the containers of the pack by the user.

When certain laminar materials are used, this upper pre-cutting line is insufficient for guaranteeing a proper separation of the containers of the pack without producing defects in the area of the tear.

To prevent said drawbacks, in national patent application P201830445, by the same holder as the present invention, a solution was developed that consists of a container pre-cutting device that comprises: a punch plate provided with upper blades to make the upper pre-cutting line, and a die plate that comprises lower blades facing the upper blades, so that when the punch plate closes on the die plate, the upper blades and the lower blades simultaneously define upper and lower pre-cutting lines on opposite faces of the multilayer material of the containers, thereby guaranteeing a proper tear of the multilayer material along said pre-cutting lines.

This solution is effective for making the upper and lower pre-cuts at the same time; however, depending on the shape of the containers, it may be the case that there is not enough space between the bodies of the multipack containers in order to mechanically actuate the lower pre-cutting device, the lower pre-cutting not being viable.

Another drawback of these pre-cutting devices with blades is that depending on the mechanical characteristics of the laminar material used, and especially the layer or layers forming it, this simultaneity of the upper and lower pre-cuts in areas very close to the laminar material, causes in the area by which neither the upper nor the lower pre-cuts are cut, can cause undesirable tears of the multilayer material in said area, either prior to or during the separation of the containers.

### Description of the invention

The container pre-cutting system of this invention is applicable to container forming machines with a laminar material, with one or more layers, which cause intermittent advances in the laminar material with a length according to an advance step of the machine.

The pre-cutting system of the invention has suitable technical features for making an upper pre-cut and a lower pre-cut in the facing or nearby areas of the lower and upper surfaces of the laminar material solving the problem mentioned and in particular those cases wherein the multipack containers do not enable a mechanical actuation, on the bottom, of a lower pre-cutting device with a blade.

To do so, and according to the invention, at least the lower pre-cutting device comprises at least one laser head, conveniently arranged to project a laser beam from a lower area, through the space existing between the successive containers of a multipack container and defining a lower pre-cutting line in the lower surface of the laminar material forming the bridge joining said containers.

Since the necessary space between the containers for the passage of the laser beam and for making the lower pre-cut is very small, this lower pre-cutting laser device satisfactorily solves the technical problem posed.

In a preferred embodiment, the upper pre-cutting device comprises an upper blade able to move vertically between an inoperative upper position and an operative lower position wherein it performs an upper pre-cut in the laminar material although it is not ruled out that the upper pre-cutting device uses, like the lower one, a laser head to perform the suitable upper pre-cuts.

Regardless of the type of upper pre-cutting device used; the upper pre-cutting device and the lower pre-cutting device with a laser are separated in the advance direction of the laminar material by a length equal to a multiple of the advance step of the container forming machine.

Thus, the upper and lower pre-cuts in a certain area of the laminar material are not made simultaneously, making both the lower and upper pre-cuts in an advance of the laminar material of a predetermined length and a sufficient time that has passed to eliminate the stresses produced by the lower pre-cut before making the upper pre-cut.

Therefore, this system is especially ideal for pre-cutting multipack containers made of different materials (PET, PP, PLA and PS).

In both cases the upper pre-cutting and lower pre-cutting devices are separated from one another by a length corresponding to several advance steps of the machine.

Lastly, it is worth mentioning that the order of the upper and lower pre-cutting devices in relation to the advance direction of the laminar material is not important, the system being able to first make the lower pre-cut and then the upper pre-cut, or vice versa, given that it does not affect the essence of the invention.

### Brief description of the content of the drawings

As a complement to the description being made, and for the purpose of helping to make the features of the invention more readily understandable, this specification is accompanied by a set of drawings which, by way of illustration and not limitation, represent the following.
- Figure 1 shows a schematic elevation view of an exemplary embodiment of the container pre-cutting system according to the invention, wherein the lower pre-cutting device, provided with a laser head, and the upper pre-cutting device equipped with a cutting blade can be seen, and longitudinally separated in the advance direction of containers formed in a multilayer, bilayer or single-layer material.
- Figure 2 shows an elevation view of an embodiment variant of the lower pre-cutting device, provided with two laser heads.
- Figure 3 shows a detailed enlargement of a cross section of the laminar material as the lower pre-cut is made by means of a laser.
- Figure 4 shows an elevation view of the upper pre-cutting device as the upper pre-cut is made and a detailed enlargement of the laminar body wherein the lower pre-cut made previously and the making of the upper pre-cut can be seen.

### Detailed description of embodiments of the invention

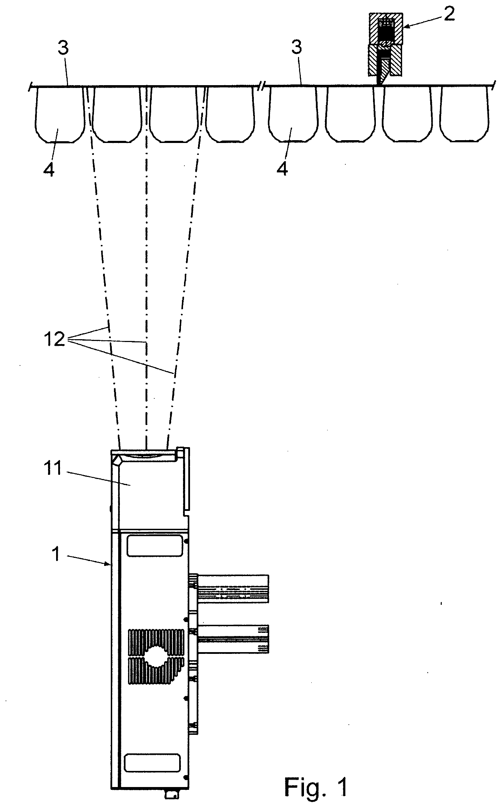

In figure 1 the container pre-cutting system comprises a lower pre-cutting device (1) and an upper pre-cutting device (2) intended to be mounted on a container forming machine (4), made with multilayer, bilayer or single-layer laminar material (3) and which, when actuated, make both pre-cuts in the lower surface and in the upper surface of the laminar material (3).

It must be mentioned that in the aforementioned figure 1, the lower pre-cutting device (1) and the upper pre-cutting device (2) are in this order in the advance direction of the laminar material (3), although it could be in the opposite order, since the order does not affect the operation of the system.

The lower pre-cut device (1) and upper pre-cut device (2) are longitudinally separated in the advance direction of the laminar material (3) by a length equal to a multiple of the advance step of the container forming machine, such that the lower and upper pre-cutting lines corresponding to the same area of laminar material (3) are not made simultaneously, but rather in two successive phases.

In said figure 1, the lower pre-cutting device (1) comprises: a laser head (11), which projects a laser beam (12) from a lower area, through the space existing between consecutive containers (4) of a multipack container and defines a lower pre-cut line in the area of the laminar material forming the bridge joining said containers.

The upper pre-cutting device has in this embodiment a vertically-movable blade, as detailed later on.

To make an upper pre-cut in the material in the same area wherein a lower pre-cut has been made it is necessary for the laminar material to move a specific number of advance steps of the machine, until said area reaches the upper pre-cutting device (2), such that a sufficient amount of time passes to release the stresses produced in the laminar material.

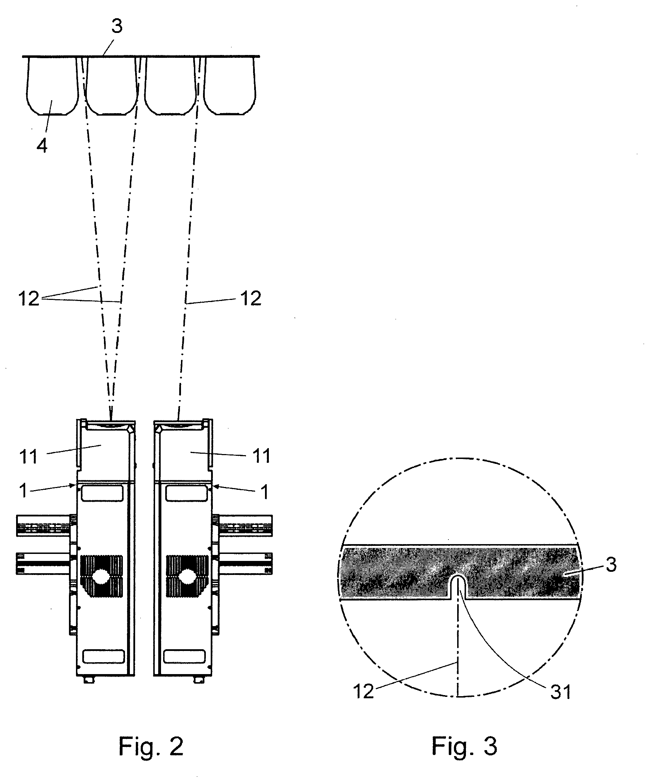

In the embodiment variant shown in figure 2, the lower pre-cutting device comprises two laser heads (11) for making lower pre-cutting lines (31) as shown schematically in figure 3.

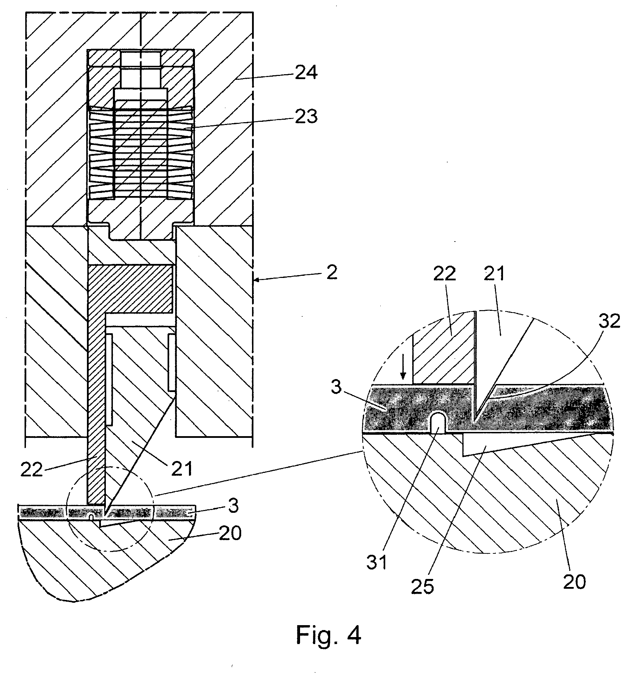

Figure 4 shows an embodiment of the upper pre-cutting device (2) shown in figure 1 which is shown in figure 4 comprises: a lower die (20) and an upper blade (21) mounted with the possibility of relative vertical movement with respect to a floating stop (22) in turn provided with limited vertical movement with respect to a punch plate (23); said upper blade (20) being mounted on calibrated springs (24).

When the upper pre-cutting device (2) is actuated, the floating stop (22) presses the laminar material (3) against the lower die (20) and the upper blade (21) penetrates the upper surface of the laminar material (3), defining the upper pre-cut (32) in the same.

As can be seen in the detailed enlargement of figure 4, the lower pre-cut (31) and the upper pre-cut (32) are slightly separated in the advance direction of the laminar material (3), the lower die (20) in the area facing the upper blade (21) having a recess (25) that allows for a certain elastic deformation of the laminar sheet (3) when making the upper pre-cut (32), which contributes to reducing the stresses of the material in the pre-cutting area.

Having sufficiently described the nature of the invention, in addition to an example of preferred embodiment, it is hereby stated for the relevant purposes that the materials, shape, size and layout of the described elements may be modified, provided that it does not imply altering the essential characteristics of the invention claimed below.

## Claims

1. A container pre-cutting system, applicable to container forming machines (4) with multilayer, bilayer or single-layer laminar material (3), that provide intermittent advances of laminar material of a length according to an advance step of the machine; said system comprising a lower pre-cutting device (1) and an upper pre-cutting device (2) suitable to make a lower pre-cut (31) and an upper pre-cut (32) in the laminar material (3); **characterized in that** the lower pre-cutting device (1) comprises at least one laser head (11), which projects a laser beam (12) from a lower area, through the space existing between consecutive containers (4) of a multipack container and defines a lower pre-cutting line in the area of the laminar material forming the bridge joining said containers (4).

2. The system according to claim 1, **characterized in that** the upper pre-cutting device (2a) comprises: an upper blade (21) able to move vertically between an inoperative upper position and an operative lower position wherein it performs an upper pre-cut in the laminar material.

3. The system according to any one of the preceding claims, **characterized in that** the upper cutting device and the lower pre-cutting device are separated in the advance direction of the laminar material (3) by a length equal to the multiple of the advance step of the container forming machine.

4. The system according to claim 1, **characterized in that** the lower pre-cutting machine (1) comprises at least one cutting laser head (15).
